Europäisches Patentamt

European Patent Office

Office européen des brevets

(19)

(11) EP 0 852 566 B1

(12) FASCICULE DE BREVET EUROPEEN

(45) Date de publication et mention
de la délivrance du brevet:
**12.05.1999 Bulletin 1999/19**

(21) Numéro de dépôt: **96927732.6**

(22) Date de dépôt: **02.08.1996**

(51) Int Cl.6: **C01B 25/165**

(86) Numéro de dépôt international:
**PCT/FR96/01233**

(87) Numéro de publication internationale:
**WO 97/12836 (10.04.1997 Gazette 1997/16)**

(54) **PROCEDE DE PREPARATION D'HYPOPHOSPHITE DE NICKEL**

VERFAHREN ZUR HERSTELLUNG VON NICKELHYPOPHOSPHIT

METHOD FOR PREPARING NICKEL HYPOPHOSPHITE

(84) Etats contractants désignés:
**AT BE CH DE DK ES FI FR GB GR IE IT LI LU NL PT SE**

(30) Priorité: **29.09.1995 FR 9511445**

(43) Date de publication de la demande:
**15.07.1998 Bulletin 1998/29**

(73) Titulaire: **CECA S.A.**
**92800 Puteaux (FR)**

(72) Inventeurs:
• **JEANNERET, Gilbert**
  **CH-2003 Neuchâtel (CH)**
• **BRUNNER, Paul**
  **CH-1871 Choex (CH)**
• **JOUSSET, Dominique**
  **F-92400 Courbevoie (FR)**

(74) Mandataire: **Haicour, Philippe et al**
**ELF ATOCHEM S.A.,**
**Département Propriété Industrielle.**
**4-8, Cours Michelet,**
**La Défense 10**
**92091 Paris Cédex 42 (FR)**

(56) Documents cités:
• **J. BESSON: "NOUVEAU TRAITE DE CHIMIE MINERALE PAUL PASCAL TOME XVII COBALT, NICKEL Deuxième fascicule" 1963, MASSON ET CIE, PARIS, FR XP002005818 cité dans la demande * page 811; page 828 * voir page 811, alinéa 3**
• **"GMELINS HANDBUCH DER ANORGANISCHEN CHEMIE 8ième édition NICKEL Partie B - Fascicule 3" 1966, VERLAG CHEMIE GMBH, WEINHEIM, DE XP002005819 voir page 961, alinéa 2**

## Description

DOMAINE TECHNIQUE DE L'INVENTION

La présente invention est celle d'un procédé de fabrication d'hypophosphite de nickel.

ART ANTERIEUR

L'hypophosphite de nickel est un sel minéral, attesté au moins depuis 1828 (Rose, Ann. Physik., [12-87-1828). Il cristallise de ses solutions aqueuses sous la forme hexahydratée $Ni(H_2PO_2)_2\,6H_2O$. Il est enregistré dans le Registry file de Chemical Abstracts avec le RN 13477-97-9. Ses éléments constitutifs, l'anion hypophosphoreux d'une part et le cation nickel d'autre part sont les espèces actives du procédé bien connu de nickelage chimique qui exploite la réaction autocatalytique d'oxydoréduction

$$NiSO_4 + 2NaH_2PO_2 + 2H_2O \rightarrow Ni + 2NaH_2PO_3 + H_2SO_4 + H_2\uparrow$$

et dont les bains sont fabriqués à partir d'hypophosphite de sodium et d'un sel soluble de nickel, généralement le sulfate. On aurait pu penser avantageux d'utiliser à cette fin l'hypophosphite de nickel, avec l'avantage évident de ne pas charger inutilement les bains en ions sodium et sulfate, sources d'incidents dus à la cristallisation de sulfate de sodium.

Le Nouveau Traité de Chimie Minérale de Paul Pascal cite deux procédés d'obtention de l'hypophosphite de nickel, l'un par double décomposition entre le sulfate de nickel et l'hypophosphite de baryum, l'autre par dissolution de l'hydroxyde de nickel dans l'acide hypophosphoreux. Pour transposer le procédé de double décomposition à l'échelle industrielle, il convient de faire appel comme source réaliste d'hypophosphite à l'hypophosphite de calcium; il en résulte un hypophosphite de nickel impropre au nickelage chimique parce que comportant une trop grande quantité de magnésium, impureté majeure apportée par l'hypophosphite de calcium lui-même, et de calcium qui ne s'élimine pas du milieu réactionnel du fait de la solubilité non négligeable du sulfate de calcium formé. En revanche, c'est la matière première apportant le nickel dans le procédé de dissolution, hydroxycarbonate de nickel ou hydroxyde de nickel métallurgique, qui est la source de polluants par apport de métaux lourds ou de magnésium. Faute d'un procédé d'obtention économiquement valable, l'utilisation de l'hypophosphite de nickel en nickelage chimique est restée très confidentielle.

EXPOSE DE L'INVENTION

Le procédé selon l'invention remédie à ces inconvénients. Il consiste à retenir le nickel d'une solution aqueuse d'un sel soluble de nickel sur résine échangeuse d'ion, et de l'éluer par une solution aqueuse d'acide hypophosphoreux. On peut ainsi obtenir des solutions hypophosphoreuses titrant 30-35g/l en nickel, que l'on peut utiliser directement pour réaliser ou régénérer des bains de nickelage chimique, ou desquels on peut cristalliser l'hypophosphite de nickel hexahydraté.

La résine à utiliser pour l'invention est une résine carboxylique (acide faible) sous forme sodique. Ce type de résines est régénérable par des solutions concentrées d'acides forts. On peut donc en tirer des solutions de régénération concentrées en ions échangés. Après régénération, la résine se retrouve sous forme acide, peu propice à adsorber les ions nickel : on la ramène sous forme carboxylate, et de préférence sodique, par traitement avec une base forte, en l'occurrence de la soude caustique. C'est une réaction très exothermique (environ 80 kcal/mole). La nature chimique de la résine importe peu, mais sa constitution doit être telle qu'elle résiste correctement aux chocs osmotiques créés par la différence des concentrations des divers réactifs qui se succèdent dans la colonne au cours de l'opération, aux chocs thermiques dus à l'exothermicité de la neutralisation de la résine acide, et aux effets physiques provenant de ce que dans les solutions très concentrées, la résine se met à flotter.

Tous les sels de nickel solubles dans l'eau conviennent pour l'invention. On préfère le sulfate de nickel parce qu'il est aisé d'éliminer l'ion sulfate de l'effluent par un sel précipitant cet anion, un sel de calcium par exemple. Le pH de la solution de sel de nickel doit être le plus proche possible de 6 afin de ne pas subir une perte de capacité de la résine par excès d'ions $H^+$. On évitera donc l'addition d'acide que l'on pratique parfois pour éviter la précipitation d'hydroxyde de nickel et accélérer la dissolution du sel.

La source d'ions hypophosphites de l'invention est l'acide hypophosphoreux. L'hypophosphite de sodium n'est pas efficace pour extraire les ions nickel fixés, tout au moins à niveau acceptable de concentration en ions nickel dans l'effluent.

La température de fonctionnement et en partie fixée par les concentrations des solutions (sel de nickel, acide hypophosphoreux, soude) et par la vitesse de leur introduction dans la colonne : il faut éviter que par le jeu de concentrations et de débits trop forts, une trop importante élévation de température n'altère la résine. Par ailleurs, avec débit trop élevé, l'échange ionique devient partiel. Un juste équilibre est l'affaire de l'homme du métier dans les conditions qui sont celles qui lui sont offertes. On s'efforce de ne pas dépasser 80°C, ni de tomber en dessous de 25°C, en tous cas on évite une température trop basse au cours de la phase d'élution du nickel par l'acide hypophosphoreux pour éviter que l'hypophosphite ne précipite dans la colonne.

Le procédé est quantitatif en nickel. Il délivre des solutions aqueuses d'hypophosphite de nickel à des concentrations variant de 1 à 35 g/l de nickel. Ces solutions sont directement utilisables par les nickeleurs pour la constitution de leurs bains de nickelage chimique. Il est possible d'ajouter des complexants pour éviter que les solutions fortement concentrées (plus de 30 g/l en $NiSO_4$) ne cristallisent à froid. On peut aussi cristalliser ces solutions pour en retirer l'hypophosphite de nickel hexahydraté, par exemple par évaporation sous vide à température modérée (< 50°C) pour éviter l'oxydation, puis cristallisation par refroidissement contrôlé.

L'hypophosphite de nickel issu du procédé selon l'invention présente l'avantage appréciable pour le nickelage de limiter très sensiblement les impuretés introduites dans les bains par les réactifs apportant les ions hypophosphite et nickel. On s'en convaincra en considérant les teneurs comparées des réactifs classiques (hypophosphite de sodium et sulfate de nickel d'une part, et hypophosphite de nickel selon l'invention d'autre part) :

| Impureté | Hypophosphite de sodium | Sulfate de nickel | Hypophosphite de nickel |
|---|---|---|---|
| Ca | 20-40 ppm |  | 11,5 ppm |
| Fe | < 3 ppm | 40 ppm | < 1 ppm |
| Pb | < 1 ppm | 1 ppm | < 1 ppm |

EXEMPLE

Les réactifs

Solution de sulfate de nickel à 0,856 mol/l : dissoudre 225 g (0,856 mole) de $NiSO_4\ 6H_2O$ dans un litre d'eau déminéralisée.
Solution d'acide hypophosphoreux à 2,5 mol/l : diluer 6 litres de $H_3PO_2$ à 50% [d = 1,21], soit 9,2 moles, avec 14 litres d'eau déminéralisée.
Solution de soude courante à 30%.
Résine échangeuse d'ions macroporeuse Amberlite IRC 76.

Le mode opératoire

Dans une colonne d'au moins 1 125, charger 1 litre de résine avec 770 ml de solution de sulfate de nickel à 0,856 mol/l, soit 38,7 g de $Ni^{2+}$. Rincer à l'eau déminéralisée (environ 1,5 litre) jusqu'à ce qu'il n'y ait plus de sulfate dans l'eau de rinçage. Déplacer le nickel avec 770 ml d'acide hypophosphoreux à 2,5 mol/l (au cours de cette opération, le litre de résine se contracte à 770 ml), puis rincer à l'eau déminéralisée. Récupérer 1060 ml d'éluat et d'eau de rinçage), qui renferment 38,7 g de $Ni^{2+}$, sous forme d'une solution à 0,622 mol/l en $Ni^{2+}$, et 1,866 mol/l en $H_2PO_2^{-}$ (excès molaire hypophosphite / nickel de 1,5).
La résine est régénérée par chargement avec 230 ml de soude à 30% puis rinçage à l'eau déminéralisée jusqu'à pH neutre.
On obtient ainsi une résine prête à l'emploi pour recevoir une nouvelle charge de sulfate de nickel.

**Revendications**

1.    Procédé pour la préparation d'hypophosphite de nickel, caractérisé en ce que l'on procède par échange ionique sur colonne échangeuse d'ions entre un sel hydrosoluble de nickel et l'acide hypophosphoreux.

2.    Procédé selon la revendication 1, caractérisé en ce que la résine échangeuse d'ion est une résine carboxylique sous forme sodique.

3.    Procédé selon les revendications 1 ou 2, caractérisé en ce que le sel de nickel est le sulfate de nickel.

**Patentansprüche**

1. Verfahren zur Herstellung von Nickelhypophosphit, dadurch gekennzeichnet, daß man an einer Ionenaustauschersäule einen Ionenaustausch zwischen einem wässerlöslichen Nickelsalz und hypophosphoriger Säure vornimmt.

2. Verfahren nach Anspruch 1, dadurch gekennzeichnet, daß das Ionenaustauscherharz ein Carbonsäureharz in der Natriumform ist.

3. Verfahren nach Anspruch 1 oder 2, dadurch gekennzeichnet, daß das Nickelsalz Nickelsulfat ist.

**Claims**

1. Process for the preparation of nickel hypophosphite, characterized in that the preparation is carried out by ion exchange on an ion exchange column between a water-soluble nickel salt and hypophosphorous acid.

2. Process according to Claim 1, characterized in that the ion exchange resin is a carboxylic resin in the sodium form.

3. Process according to Claims 1 or 2, characterized in that the nickel salt is nickel sulphate.